(19) Europäisches Patentamt / European Patent Office / Office européen des brevets

(11) **EP 3 287 013 B1**

(12) **EUROPEAN PATENT SPECIFICATION**

(45) Date of publication and mention
of the grant of the patent:
**30.10.2019 Bulletin 2019/44**

(21) Application number: **16782961.3**

(22) Date of filing: **30.03.2016**

(51) Int Cl.:
*A23D 7/00* (2006.01)   *A23L 29/10* (2016.01)
*A23L 29/238* (2016.01)   *A23L 29/256* (2016.01)
*A23L 33/115* (2016.01)   *A23L 5/00* (2016.01)
*A23L 29/20* (2016.01)   *A23L 29/212* (2016.01)
*A23L 33/12* (2016.01)   *A23D 7/005* (2006.01)
*A23L 29/269* (2016.01)

(86) International application number:
**PCT/JP2016/060318**

(87) International publication number:
**WO 2016/170939 (27.10.2016 Gazette 2016/43)**

(54) **GEL COMPOSITION AND METHOD FOR MANUFACTURING THE SAME**

GELZUSAMMENSETZUNG UND VERFAHREN IHRER HERSTELLUNG

COMPOSITION GÉLIFIÉE ET PROCÉDÉ DE SA PRÉPARATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.04.2015 JP 2015087680**

(43) Date of publication of application:
**28.02.2018 Bulletin 2018/09**

(73) Proprietor: **The Nisshin OilliO Group, Ltd.
Tokyo 104-8285 (JP)**

(72) Inventors:
• **SUYAMA Daisuke
Yokosuka-shi
Kanagawa 239-0832 (JP)**
• **SAITO Yasunobu
Yokosuka-shi
Kanagawa 239-0832 (JP)**

(74) Representative: **Dennemeyer & Associates S.A.
Postfach 70 04 25
81304 München (DE)**

(56) References cited:
EP-A1- 2 716 164       WO-A1-2007/026474
WO-A1-2010/052847     WO-A1-2011/118810
WO-A1-2012/161253     JP-A- 2006 296 315
JP-A- 2010 523 112     JP-A- 2016 073 269

## Description

### Technical Field

The invention relates to a gel composition which comprises a large amount of an oil-and/or-fat containing medium-chain fatty acids in the constituting fatty acids thereof, but shows no separation of the oil-and/or-fat and relieves gastric distress when eating.

### Background Art

Elderly people or hospitalized patients sometimes have difficulties in having enough normal meals, which may lead to undernutrition. To address such a problem, various diets allowing for sufficient nutritional intake with a small amount of diet consumption have been developed. Especially for the purpose of supplementing energy (calorie), increasing a fat content provides higher intake efficiency. Medium-chain triglycerides (hereinafter, also referred to as "MCT") are known as fats used for such diets.

Medium-chain fatty acids, which are the constituent fatty acids of MCTs, are absorbed rapidly in the digestive tract and metabolized in the liver into energy very quickly, and are thus considered to be able to provide efficient energy supplement. However, MCTs or oils-and/or-fats containing a large amount of medium-chain fatty acids in the constituent fatty acids, when consumed in large quantities at a time, may cause gastric distress such as upper gastric irritation, indigestion or feeling of fullness in the stomach.

Meanwhile, when the fat content in energy supplement diets described above is increased, separation of fats (oils-and/or-fats) sometimes occurs and causes deterioration of diet quality. Since oils-and/or-fats needs to be dispersed in diets in a stable state, the mixed amount of oil-and/or-fat is limited.

A high-nutrition jelly diet for patients with dysphagia, which contains **50** to **74** weight% of vegetable oil-and/or-fat, sucrose fatty acid ester and a gelling agent, has been proposed as a high-fat diet allowing for efficient calorie intake (Patent Literature **1**). This jelly diet, however, has not been sufficiently examined for the problem of oil-and/or-fat separation and gastric distress after ingestion.

Meanwhile, a thick liquid diet has been proposed as a diet which causes less gastric distress when ingesting a large amount of MCT at a time. This thick liquid diet contains a MCT in which a medium-chain fatty acid with **8** carbon atoms and a medium-chain fatty acid with **10** carbon atoms are contained as the constituent fatty acids and the percentage of the medium-chain fatty acid with **10** carbon atoms is not less than **60** mass% (Patent Literature **2**). However, there is a demand for diet which allows more medium-chain fatty acids to be ingested at a time than from the thick liquid diet but is less likely to cause gastric distress.

### Prior Art Documents

#### Patent Literature

Patent Literature **1:** JP-2011-182785 A
Patent Literature **2:** WO2010/052847
Patent Literature **3:** EP 2716164 A1

### Summary of Invention

#### Problems to be solved by Invention

The invention was made in view of such demand and it is an object of the invention to provide a gel composition which comprises a large amount of an oil-and/or-fat containing medium-chain fatty acids in the constituting fatty acids thereof, but shows no separation of the oil-and/or-fat and relieves gastric distress when eating.

#### Means for solving Problems

The present inventors found that the above-mentioned problems are solved by, using a gelling agent, gelling an oil-in-water type emulsion which comprises an oil-and/or-fat containing medium-chain fatty acids in the constituting fatty acids and has a predetermined average emulsified particle size, and the invention was completed. In detail, the following is provided by the invention.

(1) A gel composition prepared by gelling an oil-in-water type emulsion having an average emulsified particle size of **2** to **40** μm, the gel composition comprising **20** to **60** mass% of triglycerides, wherein **40** mass% or more of the total constituting fatty acids of the triglycerides are medium-chain fatty acids.

(**2**) The gel composition described in (**1**), wherein the triglycerides comprise a medium-chain fatty acid triglyceride.

(**3**) The gel composition described in (**1**) or (**2**), wherein the constituting fatty acids of the medium-chain fatty acid triglyceride comprise one, or two or more, selected from medium-chain fatty acids with **8**, **10** and **12** carbon atoms.

(**4**) The gel composition described in any of (**1**) to (**3**), wherein the percentage of medium-chain fatty acids with not more than **8** carbon atoms in the total medium-chain fatty acids contained as the constituting fatty acids of the triglycerides is not more than **40** mass%.

(**5**) A method for producing the gel composition described in any of (**1**) to (**4**), the method comprising: preparing an oil-in-water type emulsion having an average emulsified particle size of **2** to **40** μm by emulsifying an aqueous phase containing a gelling agent and an oil phase containing triglycerides; and gelling the oil-in-water type emulsion.

**Advantageous Effects of Invention**

The invention provides a gel composition which comprises a large amount of an oil-and/or-fat containing medium-chain fatty acids in the constituting fatty acids thereof, shows no separation of the oil-and/or-fat and relieves gastric distress when eating, and a method for producing the same.

**Embodiments for carrying out Invention**

An embodiment of the invention will be described below. However, the invention is not limited to the following embodiment.

[Gel Composition]

The gel composition of the invention is a diet obtained by turning an oil-in-water type emulsion with an average emulsified particle size of **2** to **40** μm into a gel (into the non-flowable state) using a gelling agent. Since the oil-in-water type emulsion is gelled, digestion of the gel composition of the invention after eating is slowed down and the oil-and/or-fat in the oil-in-water type emulsion is slowly absorbed. Examples of such diet include jelly, pudding and jelly drink, etc., and diets in the similar form. The gel composition of the invention also can be added as a condiment to other diets.

The package for the gel composition of the invention is not specifically limited and can be arbitrarily selected, according to the purpose, from those generally used for jelly, pudding and jelly drink, etc. Examples thereof include cup, can, paper container, aluminum pouch and bottles, etc.

The hardness of the gel composition of the invention is preferably **5000** to **20000** N/m$^2$, more preferably **6000** to **16000** N/m$^2$, and most preferably **8000** to **12000** N/m$^2$. When the hardness is within the above range, it is easy to eat and it is also possible to prevent separation of oil from the gel.

The hardness of the gel composition of the invention is a value obtained when the gel before being broken and still retaining its shape is measured by a rheometer equipped with a **20** mm-diameter columnar plunger at a compression rate of **10** mm/sec, at **20**°C and with a clearance of **5** mm.

The gel composition of the invention contains **20** to **60** mass% of triglycerides in the oil-in-water type emulsion. The triglyceride content of the gel composition of the invention is preferably **30** to **55** mass%, more preferably **35** to **53** mass%, and most preferably **40** to **50** mass%.

[Oil-in-Water type Emulsion]

The oil-in-water type emulsion used in the invention is an O/W type emulsion in which an oil-and/or-fat is dispersed in water which is the continuous phase. The method of preparing the oil-in-water type emulsion is not specifically limited and it is possible to use a general method such as a physical method, a reverse emulsification method, a liquid crystal emulsification method, a D-phase emulsification method or a three-phase emulsification method.

The average emulsified particle size of the oil-in-water type emulsion used in the invention is **2** to **40** μm, preferably **2** to **20** μm, more preferably **2.5** to **10** μm, further preferably **2.5** to **8** μm, and most preferably **3** to **6** μm. The average emulsified particle size here means the value of the particle diameter at **50**% in the cumulative distribution obtained by the laser diffraction/scattering method. Also, the oil-in-water type emulsion used in the invention is preferably configured that the particle diameter at **10**% in the cumulative distribution as measured by the above-mentioned method is not less than **0.4** times the average emulsified particle size and the particle diameter at **90**% in the cumulative distribution is not more than twice the average emulsified particle size.

When the average emulsified particle size is within the above range, gastric distress after eating the gel composition of the invention is reduced and it is also possible to prevent separation of the oil from the gel. On the other hand, when the average emulsified particle size is less than **2** μm, gastric distress is likely to occur since digestion and absorption of the medium-chain fatty acids after eating is faster. When the average emulsified particle size is more than **40** μm, the emulsion is unstable and the oil is likely to separate from the gel.

[Triglycerides]

In the triglycerides used in the invention, **40** mass% or more of the total constituting fatty acids are medium-chain fatty acids. The medium-chain fatty acids here are fatty acids with **6** to **12** carbon atoms (preferably straight-chain saturated fatty acids with **8** and **10** carbon atoms). The triglycerides in which **40** mass% or more of the total constituting fatty acids are medium-chain fatty acids are, e.g., oils-and/or-fats containing medium-chain triglycerides (MCT) in which the constituent fatty acids are only medium-chain fatty acids, and oils-and/or-fats containing medium- and long-chain triglycerides (hereinafter also referred to as "MLCT") in which the constituent fatty acids are medium-chain fatty acids and long-chain fatty acids. The triglycerides used in the invention may be a mixture of plural oils-and/or-fats as long as **40** mass% or more of the total constituting fatty acids are medium-chain fatty acids, but it is preferable to use only MCT since energy intake is quick.

In addition, in the triglycerides used in the invention, the percentage of the medium-chain fatty acid with not more than **8** carbon atoms in the total medium-chain fatty acids contained as the constituting fatty acids is preferably not more than **40** mass% (**0** to **40** mass%). The specific examples of the medium-chain fatty acids with not more than **8** carbon atoms include n-hexanoic acid as a saturated fatty acid with **6** carbon atoms and n-octanoic acid as a saturated fatty acid with **8** carbon atoms. Meanwhile, examples of medium-chain fatty acids with more than **8** carbon atoms include n-decanoic acid as a saturated fatty acid with **10** carbon atoms and n-dodecanoic acid as a saturated fatty acid with **12** carbon atoms.

When the percentage of the medium-chain fatty acid with not more than **8** carbon atoms is within the above range, it is more effective to reduce gastric distress after eating.

The MCT and MLCT can be obtained by transesterification reaction using medium-chain fatty acids or long-chain fatty acids derived from palm oil or palm kernel oil and glycerin as raw materials. The conditions for transesterification reaction are not specifically limited. The raw materials may be reacted under pressure without using catalyst and solvent, or may be reacted using a catalyst or solvent. The MLCT can be obtained also by a method using transesterification of MCT and an oil-and/or-fat other than MCT. The transesterification method is not specifically limited and may be a general method such as chemical transesterification using sodium methoxide as catalyst or enzymatic transesterification using lipase preparation as catalyst.

Meanwhile, the method of identifying and quantifying the constituting fatty acids of the triglycerides used in the invention is, e.g., a method in which the constituting fatty acids of the triglycerides are methyl-esterified and quantitative analysis is performed by gas chromatography.

[Gelling Agent]

The type and content of the gelling agent used in the invention comprises at least one component selected from the group consisting of carrageenan, locust bean gum, agar-agar, deacylated gellan gum, native gellan gum, glucomannan, xanthane gum, and alginate, so the oil-in-water type emulsion used in the invention can be turned into a gel (into the non-flowable state). The gelling agent content of the gel composition of the invention is **0.2** to **2** mass%, more preferably **0.5** to 1.5 mass%, and most preferably **0.8** to **1.2** mass%.

[Other Materials]

The gel composition of the invention contains an emulsifier, which is used for diet in the form of oil-in-water emulsion, and comprises at least one component selected from the group consisting of glycerin fatty acid ester, organic acid monoglyceride, polyglyceryl fatty acid ester, propylene glycol fatty acid ester, polyglyceryl condensed ricinoleate ester, sorbitan fatty acid ester, sucrose fatty acid ester, lecithin and modified starch. polyglyceryl fatty acid ester with HLB of **10** to **15** is preferably used. The emulsifier content of the gel composition of the invention is **0.2** to **4** mass%, more preferably **0.8** to **2** mass%, and most preferably **1.3** to **1.8** mass%.

The water used in the invention is not specifically limited, and it is possible to use tap water, well water, purified water and deionized water, etc.

Besides the materials listed above, other materials may be mixed to the gel composition of the invention as long as the effects of the invention are not impaired. Examples thereof include sugar, acidulant, vitamins, amino acid, table salt, mineral, fruit juice, flavoring ingredient and food coloring, etc.

[Method for Producing Gel Composition]

The gel composition of the invention is produced by gelling an oil-in-water type emulsion using a gelling agent. In detail, after ingredients except an oil-and/or-fat are dispersed in water, temperature is increased to the dissolution temperature of the gelling agent so that the ingredients are mixed and dissolved until a uniform preparation (the aqueous phase) is attained. Then, the oil-and/or-fat (the oil phase) is introduced, followed by emulsification using a mixer or a homogenizer, etc. After that, the mixture (the oil-in-water type emulsion) is filled in a container while keeping the temperature at not less than the solidification temperature of the gelling agent and is gelled by cooling after sealing the container. When sterilizing the gel composition of the invention, it is possible to use, e.g., a method in which a container filled with the gel composition is sealed and then heat-sterilized, a method in which the gel composition is filled in a container while sterilizing by heat, or a method in which the gel composition is heat-sterilized before being filled in a container and is packed by aseptic processing.

**Examples**

The invention will be described in more detail below in reference to Examples. However, the invention is not limited thereto. The invention is defined by the appended claims.

[Producing of Gel Composition]

Using ingredients measured according to the proportions shown in Table **1**, gel compositions were made by the following procedure.

After ingredients except an oil-and/or-fat were dispersed in water, temperature was increased to **90**°C and the ingredients were mixed and dissolved until a uniform preparation (the aqueous phase) was attained. Then, the oil-and/or-fat (MCT: the oil phase) was introduced, followed by emulsification using a homomixer. In Comparative Example **1**, a homogenizer was further used for the emulsification. Next, after each obtained emulsified mixture (an oil-in-water type emulsion: **1400**g) was filled and sealed in aluminum pouches (**15**g per pouch), retort sterilization and cooling for gelling were performed, and the gel compositions were thereby obtained. The following are ingredients used to produce the gel compositions.

MCT: Medium-chain triglyceride having an n-octanoic acid (with **8** carbon atoms) and an n-decanoic acid (with **10** carbon atoms) as the constituting fatty acids at a mass ratio of **30:70**, produced by The Nisshin OilliO Group, Ltd.
Emulsifier-**1** [modified starch]: Trade name "Emulster **500**", produced by Matsutani Chemical Industry Co.,Ltd.
Emulsifier-**2** [glycerin fatty acid ester]: Trade name "Poem J-**0081**HV" (HLB**12**), produced by Riken Vitamin Co., LTD
Gelling agent-**1** [glucomannan]: Trade name "Rheolex RS", produced by Shimizu Chemical Corporation
Gelling agent-**2** [carrageenan]: Trade name "GENUGEL WG-**108**", produced by Sansho Co., Ltd.
Gelling agent-**3** [xanthane gum]: Trade name "ECHO GUM", produced by DSP Gokyo Food & Chemical Co., Ltd.
Gelling agent-**4** [agar-agar]: Trade name "Ina agar S-**6**", produced by Ina Food Industry Co., Ltd.
Gelling agent-**5** [locust bean gum]: Trade name "MEYPRODYN **200**", produced by Sansho Co., Ltd.
White sugar: Trade name "White soft sugar", produced by Mitsui Sugar Co., Ltd.
Citric acid: Trade name "Citric acid (anhydrous)", produced by Fuso Chemical Co., Ltd.
Yogurt flavoring: Trade name "HL**01043**", produced by Ogawa & Co.,Ltd.

[Table **1**]

| (mass%) | Example 1 | Example 2 | Example 3 | Comparative Example 1 | Comparative Example 2 |
|---|---|---|---|---|---|
| MCT | 40.0 | 40.0 | 40.0 | 40.0 | 40.0 |
| Emulsifier-**1** | 1.7 | | | | |
| Emulsifier - **2** | | 1.5 | 0.2 | 3.0 | 0.01 |
| Gelling agent -**1** | 0.5 | | | | |
| Gelling agent -**2** | 0.3 | 0.2 | 0.2 | 0.2 | 0.2 |
| Gelling agent -**3** | | 0.2 | 0.2 | 0.2 | 0.2 |

(continued)

| (mass%) | Example 1 | Example 2 | Example 3 | Comparative Example 1 | Comparative Example 2 |
|---|---|---|---|---|---|
| Gelling agent -**4** | | 0.2 | 0.2 | 0.2 | 0.2 |
| Gelling agent -**5** | | 0.4 | 0.4 | 0.4 | 0.4 |
| White sugar | 6.5 | 6.5 | 6.5 | 6.5 | 6.5 |
| Citric acid | 0.2 | 0.2 | 0.2 | 0.2 | 0.2 |
| Yogurt flavoring | 0.2 | 0.2 | 0.2 | 0.2 | 0.2 |
| Water | 50.6 | 50.6 | 51.9 | 49.1 | 52.09 |
| Total | 100.0 | 100.0 | 100.0 | 100.0 | 100.0 |

[Measurement of Average Emulsified Particle Size]

In the measurement, the emulsified mixtures, which were prepared in the above-described process of producing the gel composition and were not gelled yet, were appropriately diluted thirty- to three hundred-fold with purified water to obtain liquid samples for measurement, and the average emulsified particle size was measured by a laser diffraction particle size analyzer (Microtrac MT**3000**II, manufactured by Nikkiso Co., Ltd.). Then, the obtained measurement value of the particle diameter at **50**% in the cumulative distribution was defined as the average emulsified particle size. The particle diameters at **10**% and **90**% in the cumulative distribution were also measured. The measurement result is shown in Table **2**.

[Dissolution Test of Emulsified Particles in Simulated Gastric Juice]

The cause of gastric distress which occurs when ingesting a large amount of MCT is considered to be rapid hydrolysis of the ingested MCT in the stomach and small intestine and a resulting increase in the medium-chain fatty acid level. Therefore, it was presumed that gastric distress could be reduced if release of the emulsified particles in the gastric juice is slowed down during digestion of the gel composition of the invention in the stomach. Base on such presumption, the dissolution test using simulated gastric juice was conducted to measure the emulsified particle release rate during digestion of the gel composition of the invention.

The dissolution test was conducted by the following method. Firstly, each of the produced gel compositions was cut into **5** mm square pieces to simulate a chewed state. Next, to start the test, **2**g of the cut gel composition and **100** ml of simulated gastric juice (pH **1.2**, sodium chloride **2** g/l, hydrochloric acid **7** ml/l) prepared in accordance with the disintegration test in Japanese Pharmacopoeia were put in a **200**ml beaker and stirred with a stirrer (at **100** rpm) while keeping the liquid temperature at **37**°C.

**1** minute, **30** minutes and **180** minutes after the start of the test, **1** ml of simulated gastric juice was taken so as not to pick the gel composition. Each sample was diluted six-fold with deionized water and absorbance at **500** nm was measured (by UV-**160**A, manufactured by Shimadzu Corporation). Three samples were taken from each gel composition and the average "A" of the measured values was calculated.

Meanwhile, **2**g of each emulsified mixture, before gelling into the gel composition, was added to the simulated gastric juice under the same conditions as described above, absorbance at **500** nm was measured after **1** minute, **30** minutes and **180** minutes, and the average "B" of the measured values (i.e., absorbance on the assumption that all emulsified particles are released in the simulated gastric juice) was calculated. Then, the relative value of the absorbance was calculated using the following calculation formula.

$$\text{Release Rate of Emulsified Particles in Simulated Gastric Juice} = A/B$$

The judgement was based on the obtained relative values, such that release of the emulsified particles in the simulated gastric juice was lower with the smaller value and was higher with the larger value (closer to **1**). The measurement result is shown in Table **2.** For the gel composition obtained by gelling an oil-in-water type emulsion with an average emulsified particle size of about **50** $\mu$m (Comparative Example **2**), the dissolution test was not conducted since the oil was separated at the time of measurement due to unstable emulsification and it was judged that it was not possible to evaluate accurately

[Evaluation of Gastric Distress after Eating]

Three panel members, who tend to have gastric distress after ingesting MCT, had **15**g of each gel composition produced as described above and evaluated gastric distress after **30** minutes and **180** minutes. Overall evaluation was given by the three panel members based on the following criteria. The evaluation result is shown in Table **2**.
◎: No gastric distress such as upper gastric irritation, feeling of fullness in the stomach or indigestion
○: With a little gastric distress, but acceptable as diet
×: With gastric distress such as upper gastric irritation, feeling of fullness in the stomach or indigestion

[Evaluation of Oil Separation]

**7** days after the production date, the gel compositions produced as described above were taken out of the aluminum pouches and the outer appearance was visually evaluated based on the following criteria. The evaluation result is shown in Table **2**.
○: Uniform color tone and no oil separation observed
×: Oil separation observed

[Table **2**]

| Evaluation items | Example 1 | Example 2 | Example 3 | Comparative Example 1 | Comparative Example 2 |
|---|---|---|---|---|---|
| Average emulsified particle size (μm) | 2.81 | 5.35 | 15.11 | 1.14 | 49.68 |
| Particle diameter at **10**% in the cumulative distribution | 1.98 | 2.45 | 8.57 | 0.78 | 26.96 |
| Particle diameter at **90**% in the cumulative distribution | 4.06 | 9.17 | 25.02 | 1.77 | 75.27 |
| Dissolution test (Dissolution rate) After **1** minute [A/B] A B | 0.009 (0.009) (1.034) | 0.018 (0.020) (1.103) | 0.010 (0.007) (0.678) | 0.020 (0.030) (1.467) | Did not experiment |
| After **30** minutes [A/B] A B | 0.048 (0.050) (1.037) | 0.041 (0.045) (1.105) | 0.042 (0.028) (0.671) | 0.155 (0.228) (1.470) | |
| After **180** minutes [A/B] A B | 0.068 (0.070) (1.031) | 0.050 (0.055) (1.110) | 0.049 (0.033) (0.677) | 0.204 (0.299) (1.466) | |
| Gastric distress after eating After **30** minutes After **180** minutes | ◎ ◎ | ◎ ◎ | ◎ ◎ | ○ × | × × |
| Oil separation | ○ | ○ | ○ | ○ | × |

A in the above table indicates absorbance at **500** nm when the gel composition cut into **5** mm square pieces was added to the simulated gastric juice

B in the above table indicates absorbance at **500** nm when the emulsified mixture before gelling was added to the simulated gastric juice

As shown in the above result, the gel compositions obtained by gelling oil-in-water type emulsions having an average emulsified particle size of **2** to **40** μm (Examples **1** to **3**) did not show oil separation from the gel and did not cause gastric distress after eating. On the other hand, the gel composition obtained by gelling an oil-in-water type emulsion having an average emulsified particle size of less than **2** μm (Comparative Example **1**) did not show oil separation from the gel but caused gastric distress after eating. Meanwhile, in the dissolution test of the emulsified particles, Examples **1** to **3** with smaller average emulsified particle sizes than Comparative Example **1** had a result that release of the emulsified particles in the simulated gastric juice was low, and this result supports the presumption that gastric distress can be reduced if release of the emulsified particles in the gastric juice is slowed down.

Meanwhile, the gel composition obtained by gelling an oil-in-water type emulsion having an average emulsified particle size of more than **40** μm (Comparative Example **2**) showed oil separation from the gel and also caused gastric distress after eating.

**Claims**

1. A gel composition prepared by gelling an oil-in-water type emulsion having an average emulsified particle size of **2** to **40** μm, the gel composition comprising:

   **0.2** to **2** mass% of gelling agent, the gelling agent comprising at least one component selected from the group consisting of carrageenan, locust bean gum, agar-agar, deacylated gellan gum, native gellan gum, glucomannan, xanthane gum, and alginate,
   **0.2** to **4** mass% of emulsifier, the emulsifier comprising at least one component selected from the group consisting of glycerin fatty acid ester, organic acid monoglyceride, polyglyceryl fatty acid ester, propylene glycol fatty acid ester, polyglyceryl condensed ricinoleate ester, sorbitan fatty acid ester, sucrose fatty acid ester, lecithin and modified starch, and
   **20** to **60** mass% of triglycerides,
   wherein **40** mass% or more of the total constituting fatty acids of the triglycerides are medium-chain fatty acids with **6** to **12** carbon atoms.

2. The gel composition according to claim **1**, wherein the triglycerides comprise a medium-chain fatty acid triglyceride.

3. The gel composition according to claim **1** or **2**, wherein the constituting fatty acids of the medium-chain fatty acid triglyceride comprise one, or two or more, selected from medium-chain fatty acids with **8**, **10** and **12** carbon atoms.

4. The gel composition according to any one of claims **1** to **3**, wherein the percentage of medium-chain fatty acids with not more than **8** carbon atoms in the total medium-chain fatty acids contained as the constituting fatty acids of the triglycerides is not more than **40** mass%.

5. A method for producing the gel composition according to any one of claims **1** to **4**, the method comprising:
   preparing an oil-in-water type emulsion having an average emulsified particle size of **2** to **40** μm by;

   - dispersing gelling agent and emulsifier in water,
   - increasing temperature to dissolution temperature of the gelling agent,
   - introducing triglycerides,
   - emulsifying an aqueous phase containing a gelling agent and an oil phase containing triglycerides; and
   - gelling the oil-in-water type emulsion.

**Patentansprüche**

1. Gelzusammensetzung, hergestellt durch Gelieren einer Emulsion vom Öl-in-Wasser-Typ mit einer durchschnittlichen emulgierten Teilchengröße von **2** bis **40** μm, wobei die Gelzusammensetzung umfasst:

   **0,2** bis **2** Massen-% Geliermittel, wobei das Geliermittel mindestens eine Komponente ausgewählt aus der Gruppe bestehend aus Carrageen, Johannisbrotkernmehl, Agar-Agar, deacyliertem Gellangummi, nativem Gellangummi, Glucomannan, Xanthangummi und Alginat umfasst,
   **0,2** bis **4** Massen-% Emulgator, wobei der Emulgator mindestens eine Komponente ausgewählt aus der Gruppe bestehend aus Glycerinfettsäureester, organischem Säuremonoglycerid, Polyglycerinfettsäureester, Propylenglycolfettsäureester, kondensiertem Polyglycerinfettsäureester, Sorbitanfettsäureester, Saccharosefettsäureester, Lecithin und modifizierte Stärke umfasst, und
   **20** bis **60** Massen-% Triglyceride,
   wobei **40** Massen-% oder mehr der insgesamt bestandteilbildenden Fettsäuren der Triglyceride mittelkettige Fettsäuren mit **6** bis **12** Kohlenstoffatomen sind.

2. Gelzusammensetzung nach Anspruch **1**, wobei die Triglyceride ein mittelkettiges Fettsäuretriglycerid umfassen.

3. Gelzusammensetzung nach Anspruch **1** oder **2**, wobei die bestandteilbildenden Fettsäuren des mittelkettigen Fettsäuretriglycerids eine oder zwei oder mehr, ausgewählt aus mittelkettigen Fettsäuren mit **8**, **10** und **12** Kohlenstoffatomen, umfassen.

4. Gelzusammensetzung nach einem der Ansprüche **1** bis **3**, wobei der Prozentsatz an mittelkettigen Fettsäuren mit nicht mehr als **8** Kohlenstoffatomen in den gesamten mittelkettigen Fettsäuren, die als die bestandteilbildenden Fettsäuren der Triglyceride enthalten sind, nicht mehr als **40** Massen-% beträgt.

5. Verfahren zum Herstellen der Zusammensetzung nach einem der Ansprüche **1** bis **4**, wobei das Verfahren umfasst: Herstellen einer Emulsion vom Öl-in-Wasser-Typ mit einer durchschnittlichen emulgierten Teilchengröße von **2** bis **40** μm durch;

- Dispergieren von Geliermittel und Emulgator in Wasser,
- Erhöhen der Temperatur bis zur Auflösungstemperatur des Geliermittels,
- Einführen von Triglyceriden,
- Emulgieren einer wässrigen Phase, die ein Geliermittel enthält, und einer Ölphase, die Triglyceride enthält; und
- Gelieren der Emulsion vom Öl-in-Wasser-Typ.

**Revendications**

1. Composition gélifiée préparée en gélifiant une émulsion de type huile dans eau ayant une taille de particules émulsionnée moyenne de **2** à **40** μm, la composition gélifiée comprenant :

**0,2** à **2** % en masse d'agent gélifiant, l'agent gélifiant comprenant au moins un composant choisi dans le groupe consistant en du carraghénane, de la gomme de caroube, de l'agar-agar, de la gomme gellane désacylée, de la gomme gellane native, du glucomannane, de la gomme xanthane et de l'alginate,
**0,2** à **4** % en masse d'émulsifiant, l'émulsifiant comprenant au moins un composant choisi dans le groupe consistant en de l'ester d'acide gras de glycérine, du monoglycéride d'acide organique, de l'ester d'acide gras de polyglycérol, de l'ester d'acide gras de propylène glycol, de l'ester de ricinoléate condensé de polyglycérol, de l'ester d'acide gras de sorbitane, de l'ester d'acide gras de saccharose, de la lécithine et l'amidon modifié et
**20** à **60** % en masse de triglycérides,
dans laquelle **40** % en masse ou plus du total des acides gras constitutifs des triglycérides sont des acides gras à chaîne moyenne ayant **6** à **12** atomes de carbone.

2. Composition gélifiée selon la revendication **1**, dans laquelle les triglycérides comprennent un triglycéride d'acide gras à chaîne moyenne.

3. Composition gélifiée selon la revendication **1** ou **2**, dans laquelle les acides gras constitutifs du triglycéride d'acide gras à chaîne moyenne en comprennent un ou deux ou plus d'éléments, choisis parmi les acides gras à chaîne moyenne à **8**, **10** et **12** atomes de carbone.

4. Composition gélifiée selon l'une quelconque des revendications **1** à **3**, dans laquelle le pourcentage d'acides gras à chaîne moyenne n'ayant pas plus de **8** atomes de carbone dans le total des acides gras à chaîne moyenne contenus en tant qu'acides gras constitutifs des triglycérides n'est pas supérieur à **40** % en masse.

5. Procédé de préparation de la composition gélifiée selon l'une quelconque des revendications **1** à **4**, le procédé comprenant les étapes de :
préparation d'une émulsion de type huile dans eau ayant une taille de particules émulsionnée moyenne de **2** à **40** μm en ;

- dispersant un agent gélifiant et un émulsifiant dans l'eau,
- augmentant la température jusqu'à la température de dissolution de l'agent gélifiant,
- introduisant des triglycérides,
- en émulsionnant une phase aqueuse contenant un agent gélifiant et une phase huileuse contenant des triglycérides ; et
- gélifiant l'émulsion de type huile dans eau.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011182785 A
- WO 2010052847 A

- EP 2716164 A1